# EUROPEAN PATENT APPLICATION

(11) **EP 2 672 776 A1**
(43) Date of publication of application: **11.12.2013**
(21) Application number: 11860788.6
(22) Date of filing: 09.12.2011
(51) Int. Cl.: H04W 72/08

(54) **HANDOVER PROCESSING METHOD, APPARATUS AND SYSTEM**

(30) Priority: 17.03.2011 CN 201110064725
(71) Applicant: Huawei Technologies Co., Ltd., Shenzhen, Guangdong 518129 (CN)
(72) Inventor: CHENG, Hong, Shenzhen Guangdong 518129 (CN); RONG, Lu, Shenzhen Guangdong 518129 (CN); ZHANG, Jinfang, Shenzhen Guangdong 518129 (CN); DU, Yinggang, Shenzhen Guangdong 518129 (CN)
(74) Representative: Pfenning, Meinig & Partner GbR
(86) International application number: PCT/CN2011/083756
(87) International publication number: WO 2012/122834

(57) **Abstract**

Embodiments of the present invention provide a method, an apparatus, and a system for handover processing. The method includes: receiving a handover request sent by a UE for handover to a micro base station; and sending instruction information to the UE according to a preset rule and the handover request, so as to instruct the UE to send start information, where the start information is used to instruct the micro base station to start an interference coordination mode used to enable the micro base station to mute preset time-frequency resources and corresponding to the start information. According to the embodiments of the present invention, when approaching a micro base station, a UE sends a handover request for handover to the micro base station to a macro base station; after receiving the handover request, the macro base station sends instruction information to the UE according to the handover request; the UE sends, according to the instruction information, start information used to enable the micro base station to start an interference coordination mode; and after starting the interference coordination mode, the micro base station is capable of muting preset time-frequency resources. This prevents formation of a victim UE and greatly mitigates impacts caused by a coverage hole.

## Description

### FIELD OF THE INVENTION

Embodiments of the present invention relate to the field of communication technologies, and in particular, to a method, an apparatus, and a system for handover processing.

### BACKGROUND OF THE INVENTION

An existing mobile communication network usually adopts a cellular structure. That is to say, base stations are deployed at multiple sites, and each base station forms a cell, responsible for communication of mobile users in this area. Neighboring cells have an overlapped area to ensure seamless and continuous communication for a mobile user, so that the mobile user can be handed over from a cell to a neighboring cell.

To improve the capacity of a system, a multi-layer cellular structure (referred to as a heterogeneous network in the 3GPP LTE standard, Heterogeneous Network, abbreviated as HetNet) may be adopted. The 3GPP is the Third Generation Partnership Project (The 3rd Generation Partnership Project), and the LTE is long term evolution (Long Term Evolution). The HetNet firstly implements seamless and continuous coverage of the area by using a macro cell (Macro-cell), and then implements overlapped coverage in a hot spot by using a small cell (Pico (public pico cell) or Femto (femto cell) and the like). The small cell provides a high capacity with respect to a large service traffic demand in a hot-spot area to implement "demand-based allocation" of the system capacity.

Small cells deployed in the existing HetNet may be categorized into two types: Pico and Femto.

The Pico is mainly used to solve a problem of user coverage in a single hot-spot area and the Pico is capable of providing high-rate access services for users within a radius of tens of meters. A Pico cell provides open services, that is, the Pico cell serves an open service group (Open Service Group, abbreviated as OSG). That is to say, when a user equipment (User Equipment, abbreviated as UE) in the same network moves to a location close to a base station (Pico eNB), the UE may be handed over from a serving base station to the current Pico eNB, that is, a Pico eNB of which the current signal-to-interference-plus-noise ratio (Signal-to-Interference-plus-Noise Ratio, abbreviated as SINR) is the maximum, by using cell handover.

The Femto is mainly used for indoor coverage. Its service scope is limited to authorized users within a family with the purpose of providing high-rate access services for these authorized users. Unlike the Pico cell, a Femto cell provides closed services, that is, the Femto cell serves a closed service group (Closed Service Group, abbreviated as CSG), and except authorized users in a Femto base station (Home eNB, abbreviated as HeNB), external users are not allowed to access. The external users include users (Macro UE) in a macro cell and users (Pico UE or UEs served by another HeNB) in other micro cells.

In a Femto scenario, there is a specific type of UE referred to as victim UE (Victim UE). When a Macro UE (a UE in a macro cell) moves to an area close to an HeNB, downlink signals of the HeNB severely interfere with downlink signals of the Macro UE. However, because the Macro UE is not an authorized user of the Femto, the HeNB does not allow the Macro UE to access. When the Macro UE is close to the HeNB, the SINR of the Macro UE will be so small that the broadcast channel and control channel of a Macro eNB cannot be normally demodulated. In this case, the Macro UE is incapable of communicating with a serving base station thereof. This case is referred to that a coverage hole (coverage hole) is formed around the HeNB (for the Macro UE), and the Macro UE located in the coverage hole is referred to as a victim UE.

In a Macro+Femto scenario in the prior art, the victim UE may be solved by: downlink power control of the HeNB. Specifically, the downlink power control of the HeNB refers to reducing a transmit power of a Femto base station by the Femto base station as much as possible to reduce interference caused to Macro UEs nearby while ensuring reception performance of the Femto UE served by the Femto base station.

However, the downlink power control of the HeNB only mitigates the downlink interference caused by the HeNB to the Macro UEs nearby to an extent, and reduces the area of the coverage hole, but cannot completely eliminate the coverage hole. The area of the coverage hole caused by the Femto varies depending on the distance from the Femto to the Macro eNB. When the Femto is close to the center of a base station, the area of the coverage hole is small; and when the Femto is far away from the center of a base station, the area of the coverage hole is large. Even if the downlink power control is adopted, the area of the coverage hole is still large, causing severe impacts on the communication of the Macro UE. Therefore, a new solution for a victim UE is required to be provided.

### SUMMARY OF THE INVENTION

Embodiments of the present invention provide a method, an apparatus, and a system for handover processing to prevent formation of a victim UE and eliminate impacts of a coverage hole.

An embodiment of the present invention provides a method for handover processing, including:
receiving a handover request sent by a UE for handover to a micro base station; and
sending instruction information to the UE according to a preset rule and the handover request, so as to instruct the UE to send start information, where the start information is used to instruct the micro base station to start an interference coordination mode used to enable the micro base station to mute preset time-frequency resources and corresponding to the start information.

An embodiment of the present invention provides another method for handover processing, including:
receiving, by a micro base station, start information sent by a UE according to instruction information sent by a macro base station, where the instruction information is sent by the macro base station according to a handover request sent by the UE for handover to the micro base station; and
starting, by the micro base station, an interference coordination mode corresponding to the start information according to the start information, where the interference coordination mode is used to enable the micro base station to mute preset time-frequency resources.

An embodiment of the present invention provides a base station. The base station is a macro base station and includes:
a request receiving module, configured to receive a handover request sent by a UE for handover to a micro base station; and
an instruction sending module, configured to send instruction information to the UE according to a preset rule and the handover request, so as to instruct the UE to send start information, where the start information is used to instruct the micro base station to start an interference coordination mode used to enable the micro base station to mute preset time-frequency resources and corresponding to the start information.

An embodiment of the present invention provides a base station. The base station is a micro base station and includes:
a receiving module, configured to receive start information sent by a UE according to instruction information sent by a macro base station, where the instruction information is sent by the macro base station according to a handover request sent by the UE for handover to the micro base station; and
a startup coordinating module, configured to start an interference coordination mode corresponding to the start information according to the start information received by the receiving module, where the interference coordination mode is used to enable the micro base station to mute preset time-frequency resources.

An embodiment of the present invention further provides a system for handover processing, including the macro base station and the micro base station provided in the embodiments of the present invention.

By using the method, apparatus, and system for handover processing in the embodiments of the present invention, when approaching a micro base station, a UE sends a handover request for handover to the micro base station to a macro base station; after receiving the handover request, the macro base station sends instruction information to the UE according to the handover request; the UE sends, according to the instruction information, start information used to enable the micro base station to start an interference coordination mode; and after starting the interference coordination mode, the micro base station is capable of muting preset time-frequency resources. In this way, the UE and the macro base station can use the muted time-frequency resources for communication. This prevents formation of a victim UE and greatly mitigates impacts caused by a coverage hole.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings according to these accompanying drawings without creative efforts.
FIG. 1 is a flowchart of a method for handover processing according to a first embodiment of the present invention;
FIG. 2 is a flowchart of a method for handover processing according to a second embodiment of the present invention;
FIG. 3 is a signaling flowchart of a method for handover processing according to a third embodiment of the present invention;
FIG. 4 is a schematic diagram of a base station according to the first embodiment of the present invention;
FIG. 5 is a schematic diagram of a base station according to the second embodiment of the present invention;
FIG. 6 is a schematic diagram of a base station according to the third embodiment of the present invention;
FIG. 7 is a schematic diagram of a base station according to a fourth embodiment of the present invention; and
FIG. 8 is a schematic diagram of a system for handover processing according to an embodiment of the present invention.

### DETAILED DESCRIPTION OF THE EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part of the embodiments of the present invention rather than all of the embodiments. All other embodiments obtained by persons of ordinary skill in the art based on the embodiments of the present invention without creative efforts shall fall within the protection scope of the present invention.

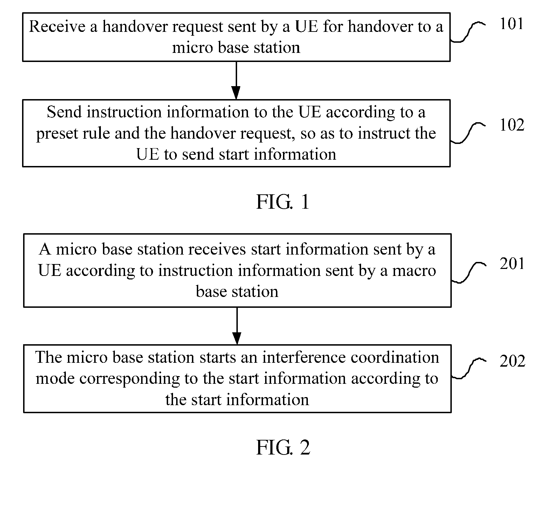

FIG. 1 is a flowchart of a method for handover processing according to a first embodiment of the present invention. As shown in FIG. 1, the method includes:
Step 101: Receive a handover request sent by a UE for handover to a micro base station.

An executor in this embodiment may be a macro base station (abbreviated as Macro eNB) in a wireless cellular network. The wireless cellular network includes a macro base station and a micro base station. A small cell covered by the micro base station may be of the Pico or Femto type. When the small cell is of the Femto type, the micro base station is a home micro base station (Home eNB, abbreviated as HeNB); and when the small cell is of the Pico type, the micro base station is referred to as a Pico eNB.

When a UE served by the macro base station moves close to a micro base station, the UE sends a handover request for handover to the micro base station to the macro base station. In this case, the macro base station may receive the handover request sent by the UE.

Step 102: Send instruction information to the UE according to a preset rule and the handover request, so as to instruct the UE to send start information, where the start information is used to instruct the micro base station to start an interference coordination mode used to enable the micro base station to mute preset time-frequency resources and corresponding to the start information. That is to say, the foregoing interference coordination mode is used to enable the micro base station to mute the preset time-frequency resources.

After receiving the handover request sent by the UE, the macro base station performs the following operations according to the preset rule and the handover request:
If the micro base station to which the UE requests for handover is an HeNB and the UE is not an authorized user of the HeNB, the macro base station sends instruction information to the UE to instruct the UE to send start information. The start information is used to enable the micro base station to start an interference coordination (Inter-cell interference coordination, abbreviated as ICIC) mode corresponding to the start information. If the micro base station to which the UE requests for handover is an HeNB and the UE is not an authorized user of the HeNB, the UE cannot be handed over to the micro base station. If no other processing is performed, the UE will become a victim UE (Victim UE). Therefore, to prevent formation of a victim UE and eliminate a coverage hole, in the technical solution provided in the embodiment of the present invention, the macro base station sends the instruction information to the UE; after receiving the instruction information, the UE sends the start information used to instruct the micro base station to start the ICIC mode; and finally the micro base station starts the ICIC mode corresponding to the start information, or if the micro base station to which the UE requests for handover is a Pico eNB and the moving speed of the UE is higher than a preset threshold, the macro base station sends instruction information to the UE to instruct the UE to send start information. The start information is used to enable the micro base station to start the ICIC mode corresponding to the start information.

In the prior art, when the micro base station to which the UE requests for handover is a Pico eNB and the moving speed of the UE is higher than a preset threshold, the UE will become a victim UE. Specifically, because conversion between a user plane and a control plane takes some time and the moving speed of the UE is high, upon completion of handover, the Macro UE is already close to the Pico eNB. In this case, great interference will be caused between Macro-Pico systems. Therefore, in the embodiment of the present invention, to prevent formation of a victim UE, when the micro base station to which the UE requests for handover is a Pico eNB and the moving speed of the UE is higher than a preset threshold, the macro base station sends instruction information to the UE, and the UE, upon receiving the instruction information, sends start information used to enable the micro base station to start the ICIC mode, and finally the micro base station starts the ICIC mode. The process of starting the ICIC mode by the micro base station may include: after coordination performed between the micro base station and the macro base station, abandoning, by the micro base station, use of some time-frequency resources, that is, the micro base station mutes some time-frequency resources. In an embodiment, the foregoing time-frequency resources may be preset.

Therefore, after the micro base station starts the ICIC mode, the UE and the macro base station may use the muted time-frequency resources for communication. This prevents interference between systems and prevents formation of a victim UE.

It should be noted that, in a HetNet system, to improve spectrum utilization, the Pico/Femto cell and macro cell thereof may use the same frequency band. In this case, mutual interference is obvious between the macro base station and users and between the micro base station and users. In the prior art, an ICIC policy may be used to mitigate impacts caused by the interference on system performance. According to the handover method provided in the embodiment of the present invention, before a victim UE is possibly formed, the micro base station is triggered, by using virtual handover between the macro base station and the micro base station of the UE, to start the ICIC mode. In this way, formation of a victim UE is prevented.

According to the embodiment of the present invention, when approaching a micro base station, a UE sends a handover request for handover to the micro base station to a macro base station; after receiving the handover request, the macro base station sends instruction information to the UE according to the handover request; the UE sends, according to the instruction information, start information used to enable the micro base station to start an interference coordination mode; and after starting the interference coordination mode, the micro base station is capable of muting preset time-frequency resources. In this way, the UE and the macro base station can use the muted time-frequency resources for communication. This prevents formation of a victim UE and greatly mitigates impacts caused by a coverage hole.

FIG. 2 is a flowchart of a method for handover processing according to a second embodiment of the present invention. As shown in FIG. 2, the method includes:
Step 201: A micro base station receives start information sent by a UE according to instruction information sent by a macro base station, where the instruction information is sent by the macro base station according to a handover request sent by the UE for handover to the micro base station.

An executor in this embodiment may be a micro base station in a wireless cellular network. This embodiment corresponds to the embodiment illustrated in FIG. 1. In this embodiment, the micro base station is an HeNB or a Pico eNB.

Referring to the description in step 101 and step 102 in the embodiment illustrated in FIG. 1, when a UE served by the macro base station moves close to a micro base station, the UE initiates a handover request and the macro base station makes a judgment according to the handover request. To prevent formation of a victim UE, the macro base station sends instruction information to the UE, and the UE sends, according to the instruction information, start information used to enable the micro base station to start an ICIC mode.

Step 202: The micro base station starts an interference coordination mode corresponding to the start information according to the start information. The foregoing interference coordination mode is used to enable the micro base station to mute preset time-frequency resources.

After receiving the start information sent by the UE, the micro base station judges whether the micro base station matches the start information, that is, judges whether the start information is sent by the UE to the micro base station. If determining that the micro base station matches the start information, the micro base station starts the ICIC mode corresponding to the start information. Specifically, the start information may be, for example, a preset random access preamble sequence.

According to the embodiment of the present invention, when approaching a micro base station, a UE sends a handover request for handover to the micro base station to a macro base station; after receiving the handover request, the macro base station sends instruction information to the UE according to the handover request; the UE sends, according to the instruction information, start information used to enable the micro base station to start an interference coordination mode; and the micro base station starts the interference coordination mode according to the start information. This prevents formation of a victim UE and greatly mitigates impacts caused by a coverage hole.

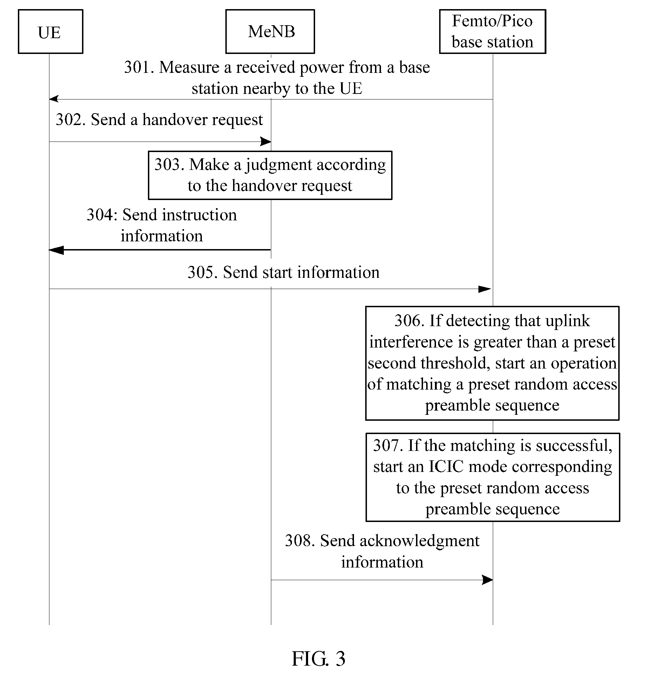

FIG. 3 is a signaling flowchart of a method for handover processing according to a third embodiment of the present invention. This embodiment is based on the embodiments illustrated in FIG. 1 and FIG. 2. As shown in FIG. 3, the method includes:
Step 301: A UE periodically measures a received power from a base station nearby to the UE.

This embodiment may be applied in a HetNet. The HetNet may include a plurality of macro base stations and a plurality of micro base stations. The UE is a UE served by a macro base station (Macro eNB, abbreviated as MeNB) of the plurality of macro base stations, and is referred to as a Macro UE. The micro base station may be an HeNB or a Pico eNB.

The UE periodically measures the received power from a base station nearby to the UE. That is, the UE periodically measures an RSRP (Reference Signal Received Power, reference signal received power) of a neighboring cell, so that the UE timely performs cell handover.

Step 302: When approaching a micro base station, the UE sends a handover request for handover start to a MeNB.

When the Macro UE approaches a micro base station, the Macro UE detects that the received power of the micro base station is the strongest of the received powers of a plurality of base stations. In this case, the Macro UE sends a measurement report to the MeNB to request for handover to the micro base station. The measurement report includes the RSRP of a target cell and an ID of the target cell, where the target cell is a cell corresponding to the micro base station to be handed over to. The process of sending a handover request by the UE is the same as an initial request for cell handover in the prior art, which is not further detailed herein.

Step 303: After the MeNB receives the handover request sent by the UE for handover to the micro base station, the macro base station makes a judgment according to the handover request. If the micro base station is an HeNB and the UE is not an authorized UE of the HeNB, step 304 is performed; or if the micro base station is a Pico eNB and the moving speed of the UE is higher than a preset first threshold, step 304 is performed.

After receiving the handover request sent by the UE, the MeNB coordinates resources with a target base station. The target base station is the micro base station to be handed over to.

During the process of resource coordination between the MeNB and the micro base station, if the MeNB knows that the target base station is and that the UE is not an authorized UE of the HeNB, the MeNB instructs the UE to send start information used to enable the HeNB to start an ICIC mode, that is, step 304 is performed. When the target base station is an HeNB and the UE is not an authorized UE of the HeNB, the MeNB knows that the UE cannot access the HeNB.

During the process of resource coordination between the MeNB and the micro base station, if the MeNB knows that the target base station is a Pico eNB, the MeNB determines the moving speed of the UE according to related information of the UE. For details about the method for determining the moving speed of the UE by the MeNB, reference may be made to the prior art regarding UE speed measurement. When the moving speed of the UE is higher than a preset first threshold, the MeNB instructs the UE to send start information used to enable the Pico eNB to start the ICIC mode, that is, step 304 is performed. The first threshold is set as required. When the moving speed of the UE is higher than the first threshold, during cell handover performed between the MeNB and the Pico eNB, the UE moving at a high speed may form a victim UE. Therefore, using the method provided in the embodiment of the present invention, the Pico eNB may be triggered to start the ICIC mode before formation of a victim UE.

Step 304: The MeNB sends instruction information to the UE to instruct the UE to send the start information used to enable the micro base station to start the ICIC mode. The ICIC mode corresponds to the start information, and is used to enable the micro base station to mute preset time-frequency resources.

When knowing that instruction information needs to be sent to the UE, the MeNB may select different ICIC modes according to data traffic and channel quality of the UE. That is, the instruction information delivered by the MeNB to the UE carries the type of the start information, so that the UE sends start information of a specified type according to the instruction information. In this way, the micro base station selects an ICIC mode corresponding to the start information.

Step 305: The UE sends the start information used to enable the micro base station to start the ICIC mode.

Specifically, the start information may be, for example, a preset random access preamble sequence (dedicated preamble sequence).

In an LTE system, when a UE performs cell handover, a source serving base station may instruct the UE to send a random access preamble sequence over a physical random access channel (Physical Random Access Channel, abbreviated as PRACH), so as to access a target base station. In the LTE, Zadoff-Chu (ZC) sequences of prime number lengths may be selected as preset random access preamble sequences, with the total number of 64, where a preamble sequence for a "contention-based" access and a preamble sequence for "non-contention" access are included. The preamble sequence for a "contention-based" access is randomly selected by a user in a sequence set. The preamble sequence for a "non-contention" access is assigned by the serving base station to the UE.

In the embodiment of the present invention, some preset preamble sequences for a "non-contention-based" access may be used as the start information used to instruct to perform a virtual handover and start the ICIC mode. When a Macro UE attempts to access a micro base station, one of the several preset preamble sequences may be selected to instruct to send the selected preamble sequence over the PRACH. As regards the micro base station, the several preset random access preamble sequences mean starting a corresponding ICIC protection policy when uplink interference thereof exceeds a preset threshold. As regards other UEs normally accessing the MeNB, these preamble sequences are the same as other preamble sequences for a "non-contention" access, which do not have other special meanings. To reduce the number of attempts in mode identification performed by the micro base station, and reduce complexity, the embodiment of the present invention may limit the number of preset preamble sequences, for example, 1 to 4.

Each of the preset preamble sequences may correspond to a preset ICIC mode. These mapping relationships may be preconfigured on each of the base stations. Then the MeNB may select different ICIC modes for a UE according to data traffic and channel quality of the UE. That is, instruction information delivered by the MeNB to the UE carries the type of the preamble sequence, so that the UE sends a preamble sequence of a specified type according to the instruction information. In this way, the micro base station selects a specified ICIC mode.

It should be noted that, in a scenario of soft handover, when the UE sends a preset preamble sequence to the micro base station, the UE and the MeNB are not disconnected, and then, the UE does not need to access the MeNB again; in a scenario of hard handover, when the UE sends a preset preamble sequence to the micro base station, the UE and the MeNB are disconnected, and the UE needs to access the MeNB again because the UE in this embodiment is not actually handed over to the micro base station.

Step 306: If detecting that uplink interference is greater than a preset second threshold, the micro base station starts an operation of matching a preset random access preamble sequence.

The micro base station periodically detects uplink interference. When it is detected that the uplink interference is greater than a threshold, a Macro UE may exist in the neighborhood. In this case, the micro base station starts a mode matching operation for the preset random access preamble sequence. Specifically, the matching operation is: performing an inner-product operation using sequences in a preset random access preamble sequence set and sequences in the uplink PRACH. If signals output by the inner-product operation are a series of pulse sequences that are approximately uniformly-spaced, the mode is matched. For details about the mode matching operation, reference may be made to the prior art, which is not further detailed herein.

Step 307: If the matching is successful, the micro base station starts an ICIC mode corresponding to the preset random access preamble sequence.

In step 306, if the micro base station performs the mode matching for the random access preamble sequence successfully, the preset random access preamble sequence is used to instruct the micro base station to start the ICIC mode. In this case, the micro base station starts the ICIC mode.

The following describes the ICIC mode (that is, the ICIC policy) in detail according to this embodiment.

This embodiment may inherit the ICIC policy of an existing solution. In an existing HetNet scenario, the ICIC policy may be categorized into TDM (Time Division Multiplexing, time division multiplexing) and FDM (Frequency-division multiplexing, frequency division multiplexing), which respectively correspond to time-domain resource muting and frequency-domain resource muting.

The TDM-ICIC policy (time-domain muting) may specifically be: The micro base station mutes resources in the time domain (for example, muting on several OFDM (Orthogonal Frequency Division Multiplexing, orthogonal frequency division multiplexing) symbols in a subframe); and Macro UEs near the micro base station receive less interference on these time-domain resources, thereby ensuring normal communication of these Macro UEs. The time-domain muting may be implemented in two manners, that is, almost blank subframe muting (Almost Blank Subframe) and multicast-broadcast single frequency network-like subframe muting (MBSFN-like Subframe). In almost blank subframe muting manner, only common reference signals (CRS) are sent in the data part. Therefore, interference to a macro cell is mainly caused by a control channel of the first several OFDM symbols and reference signals. In multicast-broadcast single frequency network-like subframe muting manner, the entire data part corresponding to the subframe is muted, and reference signals are not sent. Therefore, interference to the macro cell is only caused by the control channel of the first several OFDM symbols.

The FDM-ICIC policy (frequency-domain muting) may specifically be: Frequency resources are divided into two parts, f1 and f2; the macro cell and the micro cell can use the f2 simultaneously; only the macro cell can use f1. In this way, the Macro UE receiving severe interference from the micro base station may use the frequency band f1 for transmission, thereby ensuring normal communication.

In the embodiment of the present invention, each preset preamble sequence corresponds to an ICIC mode, and different time-frequency resources are muted in different ICIC modes, which are not overlapped. The MeNB and the micro base station may be informed of the mapping relationship between a preset preamble sequence and an ICIC mode (the resource muting method) in advance. If the micro base station has a plurality of Macro UEs to protect, and preamble sequences sent by the plurality of Macro UEs correspond to different ICIC modes, the micro base station starts different corresponding ICIC modes. That is, as mentioned above, the micro base station mutes the time-frequency resources corresponding to these ICIC modes.

In another implementation manner, to prevent a malicious UE from sending a preset preamble sequence, this embodiment may further include:
Step 308: After sending the instruction information to the UE, the MeNB sends acknowledgment information indicating true existence of the UE to the micro base station.

Specifically, to prevent a malicious UE from sending a preamble sequence, the MeNB may also send acknowledgment information to a micro base station over a low-rate backhaul (Backhaul). The acknowledgment information at least indicates existence of the UE, and may not carry any other information.

After the micro base station starts the ICIC mode, if a condition is met, the ICIC mode may be disabled. Specifically, this embodiment may further include the following steps:
Step a1: If receiving no acknowledgment information indicating true existence of the UE from the MeNB, the micro base station disables the ICIC mode. If after waiting for a period of time, the micro base station still receives no acknowledgment indicating existence of the UE over the backhaul, the micro base station may consider that a preamble sequence is sent by a malicious UE, and disables the ICIC mode.

Step a1 is an optional step, and this step may prevent a malicious UE from sending a preset preamble sequence. The MeNB sends an acknowledgment signal to the micro base station over the backhaul. Assuming that the backhaul carries small data traffic and provides no guarantee in terms of delay, after detecting a preset preamble sequence, the micro base station firstly enables the ICIC mode, and disables the ICIC mode if still failing to receive the acknowledgment after waiting for a possible maximum backhaul delay.

If the UE is far away from the micro base station, the micro base station may disable the ICIC mode to improve spectrum utilization of the micro cell. When the UE is far away from the micro base station, the MeNB may inform the micro base station, or the micro base station may know this by power detection. The specific details are described in the following step a2 and step a3.

Step a2: If receiving a notification sent by the MeNB for notifying the micro base station of disabling the ICIC mode, the micro base station disables the ICIC mode.

The UE protected by the ICIC mode may leave a neighboring area of the micro base station in an RRC (Radio Resource Control, radio resource control) idle mode. In the RRC idle mode, the UE does not send any signal, and in this case, the MeNB may send a notification signal to the micro base station over the backhaul for notifying the micro base station of disabling the ICIC mode. The MeNB may know that the UE has been far away from the micro base station in a plurality of manners. For example, when the UE sends a request for handover to another base station to the MeNB, the MeNB may know that the UE has been far away from the micro base station.

Step a3: If detecting that uplink interference is smaller than or equal to a preset third threshold, the micro base station disables the ICIC mode.

In power detection, the micro base station may monitor interference power on the uplink time-frequency resources. If the interference power is smaller than or equal to a threshold, that is, the third threshold, the micro base station considers that the UE has been far away from the micro base station, and in this case, the micro base station disables the ICIC mode.

It should be noted that, the ICIC mode may be disabled by using any one of the manners described in step a2 and step a3 or the ICIC mode may be disabled by using both of step a2 and step a3.

In addition, in other implementation manners, this embodiment may further include other optional steps:
Step b1: In the RRC idle mode, when a UE enters a neighboring area of a micro base station, if the signal-to-interference-plus-noise ratio of the broadcast channel of the UE is reduced to a threshold, the UE is handed over from the RRC idle mode to the RRC connected (Connected) mode, and then the UE sends an RSRP measurement report to a serving base station to initiate cell handover. For the subsequent processes, reference may be made to the steps following step 302.

In the RRC idle mode, a UE sends no uplink data, but the UE may monitor the broadcast channel of a serving base station. When the UE approaches the micro base station, the received downlink interference causes the signal-to-interference-plus-noise ratio of the broadcast channel to be reduced. When the signal-to-interference-plus-noise ratio is reduced to a threshold, the UE may initiate cell handover.

Step b2: The micro base station reserves channel resources for initial access of the UE.

A micro base station may long-time mute a channel for initial access in a macro base station system to protect a UE powered on in a coverage hole, where the micro base station is located in the coverage of the macro base station. Only a small percentage of random access channels and control channels are reserved in the time-frequency resources of the entire micro base station. Specific reservation of the channel resources may be determined according to the probability of presence of the UE in the range of the coverage hole and percentage of the muted resources.

After the micro base station reserves the channel resources for initial access of the UE, when the UE is powered on in the coverage hole, the UE initiates access to the micro base station by using the reserved resources. After failing to access the micro base station, the UE may attempt to access another base station. In this case, the UE may access the MeNB. After accessing the MeNB, the UE may trigger the micro base station, by using the handover method provided in the embodiment of the present invention, to start the ICIC mode.

Step b3: After sending instruction information to the UE, the MeNB delivers a message to the UE. If receiving no response from the UE, the MeNB sends the message to the micro base station, so that the micro base station forwards the message to the UE.

After the MeNB sends instruction information to the UE, the UE may send start information according to the instruction information, and the micro base station starts the ICIC mode according to the start information. After the micro base station starts the ICIC mode, if the MeNB delivers another signaling message to the UE (that is, the message in this step), it is possible that the MeNB receives no response from the UE. When the MeNB receives no response from the UE, the micro base station needs to forward the signaling message. The MeNB knows whether a UE served by the MeNB is a victim UE, and also knows which micro base station serves the UE. Therefore, the MeNB may notify the corresponding micro base station over the backhaul of forwarding the message.

The foregoing steps b1, b2, and b3 belong to applications in some special scenarios of the embodiment of the present invention.

In the embodiment of the present invention, a problem of the coverage hole in the Macro-Femto scenario may be solved by implementing only a small quantity of non-real-time interaction between an MeNB and a micro base station. The ICIC mode is initiated by a Macro UE (a UE served by a macro base station), the response speed is high, and the resource utilization is high. An existing UE is capable of performing the operations in the embodiment of the present invention, which ensures backward compatibility of the UE.

By using the method for handover processing in the embodiment of the present invention, when no backhaul connection is available between two base stations (a macro base station and a micro base station) or only a low-rate backhaul connection with small data traffic is available, a small quantity of control information can be transmitted by a serving base station to a target base station by using a virtual handover between a UE and two base stations. The control information may be used to perform ICIC between the two base stations, thereby preventing formation of a victim UE, and greatly mitigating impacts caused by a coverage hole. The virtual handover in the embodiment of the present invention means that a source serving base station instructs a UE to send a preset random access preamble sequence but does not allow the UE to be actually handed over to a target base station.

Persons of ordinary skills in the art may understand that all or part of steps of the foregoing method embodiments may be implemented by a computer program instructing relevant hardware. The foregoing program may be stored in a computer readable storage medium. When the program is run, the steps included in the foregoing method embodiments are performed. The foregoing storage medium includes various media capable of storing program code, such as a ROM, a RAM, a magnetic disk, or an optical disk.

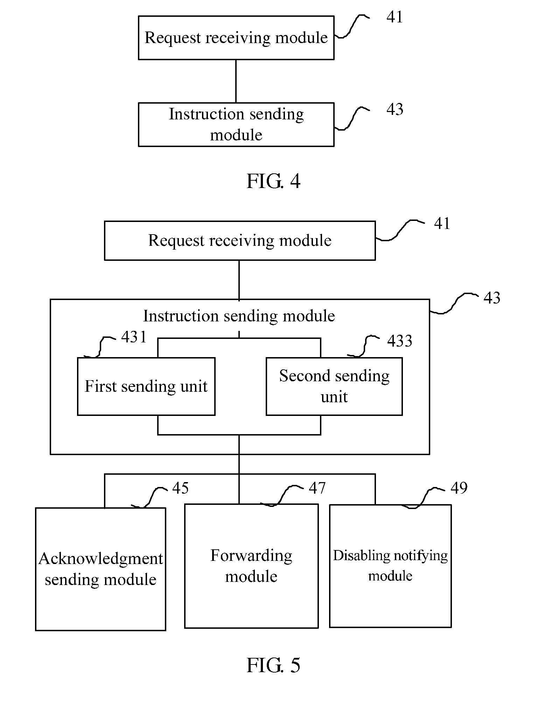

FIG. 4 is a schematic diagram of a base station according to the first embodiment of the present invention, where the base station is a macro base station. As shown in FIG. 4, the base station includes: a request receiving module 41 and an instruction sending module 43.

The request receiving module 41 is configured to receive a handover request sent by a UE for handover to a micro base station.

The instruction sending module 43 is configured to send instruction information to the UE according to a preset rule and the handover request received by the request receiving module 41, so as to instruct the UE to send start information, where the start information is used to instruct the micro base station to start an interference coordination mode used to enable the micro base station to mute preset time-frequency resources and corresponding to the start information.

For details about working procedures and working principles of modules in this embodiment, reference may be made to the description of the foregoing method embodiment illustrated in FIG. 1, which are not further detailed herein.

According to the embodiment of the present invention, when approaching a micro base station, a UE sends a handover request for handover to the micro base station to a macro base station; after receiving the handover request, a request receiving module of the macro base station instructs a sending module to send instruction information to the UE according to a preset rule and the handover request; the UE sends, according to the instruction information, start information used to enable the micro base station to start an interference coordination mode; and after the micro base station starts the interference coordination mode, formation of a victim UE is prevented and impacts caused by a coverage hole is greatly mitigated.

FIG. 5 is a schematic diagram of a base station according to the second embodiment of the present invention. Based on the embodiment illustrated in FIG. 4, and as shown in FIG. 5: the instruction sending module 43 includes a first sending unit 431 and/or a second sending unit 433.

The first sending unit 431 is configured to send, if the micro base station is a home micro base station and the UE is not an authorized UE of the home micro base station, instruction information to the UE according to the handover request.

The second sending unit 433 is configured to send, if the micro base station is a public micro base station and the moving speed of the UE is higher than a preset first threshold, instruction information to the UE according to the handover request.

The base station may further include: an acknowledgment sending module 45, a forwarding module 47, and/or a disabling notifying module 49.

The acknowledgment sending module 45 is configured to send, after the instruction sending module 43 sends the instruction information to the UE, acknowledgment information indicating true existence of the UE to the micro base station.

The forwarding module 47 is configured to: after the instruction sending module 43 sends the instruction information to the UE, deliver a message to the UE; and if no response is received from the UE, send a message to the micro base station, so that the micro base station forwards the message to the UE.

The disabling notifying module 49 is configured to notify, after the instruction sending module 43 sends the instruction information to the UE, the micro base station of disabling the interference coordination mode if the UE leaves.

For details about working procedures and working principles of modules and units in this embodiment, reference may be made to the description of the foregoing method embodiments, which are not further detailed herein.

By using the macro base station provided in the embodiment of the present invention, when no backhaul connection is available between two base stations (a macro base station and a micro base station) or only a low-rate backhaul connection with small data traffic is available, a small quantity of control information can be transmitted by a serving base station to a target base station by using a virtual handover between a UE and two base stations. The control information may be used to perform ICIC between the two base stations, thereby preventing formation of a victim UE, and greatly mitigating impacts caused by a coverage hole.

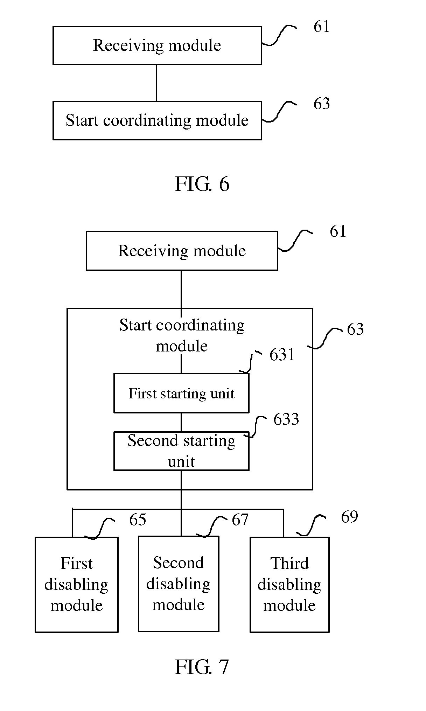

FIG. 6 is a schematic diagram of a base station according to the third embodiment of the present invention, where the base station is a micro base station. As shown in FIG. 6, the base station includes: a receiving module 61 and a startup coordinating module 63.

The receiving module 61 is configured to receive start information sent by a UE according to instruction information sent by a macro base station, where the instruction information is sent by the macro base station according to a handover request sent by the UE for handover to the micro base station.

The startup coordinating module 63 is configured to start an interference coordination mode corresponding to the start information according to the start information received by the receiving module 61, where the interference coordination mode is used to enable the micro base station to mute preset time-frequency resources.

For details about working procedures and working principles of modules in this embodiment, reference may be made to the description of the foregoing method embodiment illustrated in FIG. 2, which are not further detailed herein.

According to the embodiment of the present invention, when approaching a micro base station, a UE sends a handover request for handover to the micro base station to a macro base station; after receiving the handover request, the macro base station sends instruction information to the UE according to the handover request; the UE sends, according to the instruction information, start information used to enable the micro base station to start an interference coordination mode; and after starting the interference coordination mode, the micro base station is capable of muting preset time-frequency resources. In this way, the UE and the macro base station can use the muted time-frequency resources for communication. This prevents formation of a victim UE and greatly mitigates impacts caused by a coverage hole.

FIG. 7 is a schematic diagram of a base station according to the fourth embodiment of the present invention. Based on the embodiment illustrated in FIG. 6, as shown in FIG. 7: the startup coordinating module 63 includes: a first starting unit 631 and a second starting unit 633.

The first starting unit 631 is configured to start, if it is detected that uplink interference is greater than a preset second threshold, an operation of matching a preset random access preamble sequence.

The second starting unit 633 is configured to start, if the matching performed by the first starting unit 631 is successful, an interference coordination mode corresponding to the preset random access preamble sequence.

The base station may further include: a first disabling module 65, a second disabling module 67, and/or a third disabling module 69.

The first disabling module 65 is configured to disable, if acknowledgment information indicating true existence of the UE from the macro base station is not received, the interference coordination mode.

The second disabling module 67 is configured to disable, if a notification notifying the micro base station of disabling the interference coordination mode is received from the macro base station, the interference coordination mode.

The third disabling module 69 is configured to disable, if it is detected that uplink interference is smaller than or equal to a preset third threshold, the interference coordination mode.

For details about working procedures and working principles of modules and units in this embodiment, reference may be made to the description of the foregoing method embodiments, which are not further detailed herein.

By using the micro base station provided in the embodiment of the present invention, when no backhaul connection is available between two base stations (a macro base station and a micro base station) or only a low-rate backhaul connection with small data traffic is available, a small quantity of control information can be transmitted by a serving base station to a target base station by using a virtual handover between a UE and two base stations. The control information may be used to perform ICIC between the two base stations, thereby preventing formation of a victim UE, and greatly mitigating impacts caused by a coverage hole.

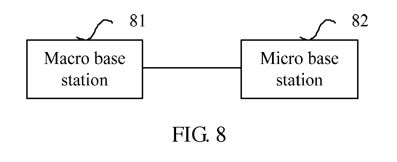

FIG. 8 is a schematic diagram of a handover system according to an embodiment of the present invention. The system for handover processing includes: a macro base station 81 and a micro base station 82.

The macro base station 81 is configured to receive a handover request sent by a UE for handover to the micro base station; and send instruction information to the UE according to a preset rule and the handover request, so as to instruct the UE to send start information, where the start information is used to instruct the micro base station to start an interference coordination mode used to enable the micro base station to mute preset time-frequency resources and corresponding to the start information.

The micro base station 82 is configured to receive the start information sent by the UE according to the instruction information sent by the macro base station; and start the interference coordination mode corresponding to the start information according to the start information.

Specific structural modules and functions corresponding to the modules of the macro base station 81 and the micro base station 82 are detailed in the foregoing embodiments, which are not further detailed herein.

In the system for handover processing in the embodiment of the present invention, when approaching a micro base station, a UE sends a handover request for handover to the micro base station to a macro base station; after receiving the handover request, the macro base station sends instruction information to the UE according to the handover request; the UE sends, according to the instruction information, start information used to enable the micro base station to start an interference coordination mode; and after starting the interference coordination mode, the micro base station is capable of muting preset time-frequency resources. In this way, the UE and the macro base station can use the muted time-frequency resources for communication. This prevents formation of a victim UE and greatly mitigates impacts caused by a coverage hole.

Finally, it should be noted that, the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solution described in the foregoing embodiments or make equivalent substitutions to some technical features thereof; and these modifications or replacements should not make corresponding technical solutions depart from the spirit and scope of the technical solution of the embodiments of the present invention.

## Claims

1. A method for handover processing, comprising:
receiving a handover request sent by a UE for handover to a micro base station; and
sending instruction information to the UE according to a preset rule and the handover request, so as to instruct the UE to send start information, wherein the start information is used to instruct the micro base station to start an interference coordination mode used to enable the micro base station to mute preset time-frequency resources and corresponding to the start information.

2. The method according to claim 1, wherein the sending instruction information to the UE according to a preset rule and the handover request comprises:
if the micro base station is a home micro base station and the UE is not an authorized UE of the home micro base station, sending instruction information to the UE according to the handover request; or
if the micro base station is a public micro base station and the moving speed of the UE is higher than a preset first threshold, sending instruction information to the UE according to the handover request.

3. The method according to claim 1 or 2, wherein the start information is a preset random access preamble sequence.

4. The method according to claim 1 or 2, after the sending instruction information to the UE according to a preset rule and the handover request, further comprising: sending acknowledgment information indicating true existence of the UE to the micro base station.

5. The method according to claim 1 or 2, after the sending instruction information to the UE according to a preset rule and the handover request, further comprising:
delivering a message to the UE, and if no response is received from the UE, sending a message to the micro base station, so that the micro base station forwards the message to the UE.

6. The method according to claim 1 or 2, after the sending instruction information to the UE according to a preset rule and the handover request, further comprising:
if the UE leaves, notifying the micro base station of disabling the interference coordination mode.

7. A method for handover processing, comprising:
receiving, by a micro base station, start information sent by a UE according to instruction information sent by a macro base station, wherein the instruction information is sent by the macro base station according to a handover request sent by the UE for handover to the micro base station; and
starting, by the micro base station, an interference coordination mode corresponding to the start information according to the start information, wherein the interference coordination mode is used to enable the micro base station to mute preset time-frequency resources.

8. The method according to claim 7, wherein the start information is a preset random access preamble sequence.

9. The method according to claim 8, wherein the starting, by the micro base station, an interference coordination mode corresponding to the start information according to the start information comprises:
if detecting that uplink interference is greater than a preset second threshold, starting, by the micro base station, an operation of matching the preset random access preamble sequence; and
if the matching is successful, starting, by the micro base station, an interference coordination mode corresponding to the preset random access preamble sequence.

10. The method according to any one of claims 7 to 9, after the starting, by the micro base station, an interference coordination mode corresponding to the start information according to the start information, further comprising:
if the micro base station does not receive acknowledgment information indicating true existence of the UE from the macro base station, disabling, by the micro base station, the interference coordination mode; or
if the micro base station receives a notification notifying the micro base station of disabling the interference coordination mode which is sent by the macro base station, disabling, by the micro base station, the interference coordination mode; or
if the micro base station detects that uplink interference is smaller than or equal to a preset third threshold, disabling, by the micro base station, the interference coordination mode.

11. The method according to claim 10, further comprising: reserving, by the micro base station, channel resources for initial access of the UE.

12. A base station, the base station being a macro base station, wherein the base station comprises:
a request receiving module, configured to receive a handover request sent by a UE for handover to a micro base station; and
an instruction sending module, configured to send instruction information to the UE according to a preset rule and the handover request, so as to instruct the UE to send start information, wherein the start information is used to instruct the micro base station to start an interference coordination mode used to enable the micro base station to mute preset time-frequency resources and corresponding to the start information.

13. The base station according to claim 12, wherein the instruction sending module comprises:
a first sending unit, configured to send, if the micro base station is a home micro base station and the UE is not an authorized UE of the home micro base station, instruction information to the UE according to the handover request; and/or
a second sending unit, configured to send, if the micro base station is a public micro base station and the moving speed of the UE is higher than a preset first threshold, instruction information to the UE according to the handover request.

14. The base station according to claim 12 or 13, further comprising:
an acknowledgment sending module, configured to send, after the instruction sending module sends the instruction information to the UE, acknowledgment information indicating true existence of the UE to the micro base station.

15. The base station according to claim 12 or 13, further comprising:
a forwarding module, configured to: after the instruction sending module sends the instruction information to the UE, deliver a message to the UE; and if no response is received from the UE, send a message to the micro base station, so that the micro base station forwards the message to the UE.

16. The base station according to claim 12 or 13, further comprising:
a disabling notifying module, configured to notify, after the instruction sending module sends the instruction information to the UE, the micro base station of disabling the interference coordination mode if the UE leaves.

17. A base station, the base station being a micro base station, wherein the base station comprises:
a receiving module, configured to receive start information sent by a UE according to instruction information sent by a macro base station, wherein the instruction information is sent by the macro base station according to a handover request sent by the UE for handover to the micro base station; and
a startup coordinating module, configured to start an interference coordination mode corresponding to the start information according to the start information received by the receiving module, wherein the interference coordination mode is used to enable the micro base station to mute preset time-frequency resources.

18. The base station according to claim 17, wherein the startup coordinating module comprises:
a first starting unit, configured to start, if it is detected that uplink interference is greater than a preset second threshold, an operation of matching a preset random access preamble sequence; and
a second starting unit, configured to start, if the matching performed by the first starting unit is successful, an interference coordination mode corresponding to the preset random access preamble sequence.

19. The base station according to claim 17 or 18, further comprising:
a first disabling module, configured to disable, if acknowledgment information indicating true existence of the UE from the macro base station is not received, the interference coordination mode; and/or
a second disabling module, configured to disable, if a notification notifying the micro base station of disabling the interference coordination mode is received from the macro base station, the interference coordination mode; and/or
a third disabling module, configured to disable, if it is detected that uplink interference is smaller than or equal to a preset third threshold, the interference coordination mode.

20. A system for handover processing, comprising the base station according to claim 12 and the base station according to claim 17.
